# EUROPÄISCHE PATENTANMELDUNG

(11) **EP 3 075 708 A1**
(43) Veröffentlichungstag der Anmeldung: **05.10.2016**
(21) Anmeldenummer: 15162386.5
(22) Anmeldetag: 02.04.2015
(51) Int. Cl.: C01G 23/00, C01G 49/00, C01G 3/00, C09K 15/32

(54) **SUBOXID ENTHALTEND KUPFER UND SILICIUM**

(71) Anmelder: Evonik Röhm GmbH, 64293 Darmstadt (DE)
(72) Erfinder: Katusic, Stipan, 65812 Bad Soden (DE); Kress, Peter, 63791 Karlstein (DE); Numrich, Uwe, 64846 Groß-Zimmern (DE); Renger, Tobias, 63538 Großkrotzenburg (DE); Wiegand, Armin, 63538 Großkrotzenburg (DE)

(57) **Zusammenfassung**

Kompositpartikel, die Kupfer und Silicium enthalten und optional B, Ce, Co, Fe, La, Mn, Ti und/oder Zr enthalten, wobei der Anteil an Cu 30 bis 95 Gew.-%, Si 5 bis 40 Gew.-%, B, Ce, Co, Fe, La, Mn, Ti oder Zr 5 bis 50 Gew.-%, jeweils bezogen auf die Summe von Cu, Si, B, Ce, Co, Fe, La, Mn, Ti und Zr ist und
bei denen der Quotient aus dem experimentell gefundenen Sauerstoffgehalt zum theoretischen Sauerstoffgehalt <1 ist und die eine O₂-Absorptionskapazität, bestimmt nach DIN 6139-1, von wenigstens 40 mg O₂/g Kompositpartikel aufweisen.

## Beschreibung

Die Erfindung betrifft Verfahren zur Herstellung von Kupfer und Silicium enthaltenden Suboxiden.

Die Erfindung betrifft weiterhin die Kupfer und Silicium enthaltenden Suboxide selbst und deren Verwendung.

Die Entfernung von Sauerstoff aus Verpackungen, wie Lebensmittelverpackungen, ist in vielen Fällen unerlässlich um die Haltbarkeit des Inhaltes sicherzustellen. Cruz et al. geben eine Übersicht über die verschiedenen Systeme zum Abfangen von Sauerstoff, umfassend die Oxidation von Eisen, die Oxidation von Ascorbinsäure, die enzymatische Oxidation, die Oxidation ungesättigter Kohlenwasserstoffe und die photosensibilisierte Oxidation. [Renato Souza Cruz, Geany Peruch Camilloto and Ana Clarissa dos Santos Pires (2012). Oxygen Scavengers: An Approach on Food Preservation, Structure and Function of Food Engineering, Prof. Ayman Amer Eissa (Ed.), ISBN: 978-953-51-0695-1, InTech, DOI: 10.5772/48453; http://www. intechopen. com/books/structure-and-function-of-food-engineering/oxygen-scavengers-an-approach-on-foodpreservation].

In EP-A-2196495 wird vorgeschlagen Mischoxide aus mindestens einem vollständig oxidierten Teiloxid und aus mindestens einem Übergangsmetallsuboxid zur Verbesserung der Barriereeigenschaft eines polymeren Grundmaterials einzusetzen. Die Ausführungen lassen darauf schließen, dass es sich bei dem Mischoxid um eine physikalische Mischung wenigstens zweier Oxide handelt. Es werden keine Angaben zu den Anteilen der Mischoxidpartner oder geeigneter Übergangsmetallsuboxide gemacht.

Als problematisch kann bei Einsatz dieser Mischoxide deren Einarbeitung in das polymere Grundmaterial, etwa in Form der Trennung der Mischoxidkomponenten und deren Agglomeration, angesehen werden. Zudem erweist sich die Fähigkeit dieser Mischoxid mit Sauerstoff zu reagieren als verbesserungswürdig.

In der deutschen Patentanmeldung mit dem Aktenzeichen 10 2013 220253 und dem Anmeldetag 08.10.2013 werden Kupfer und Siliciumdioxid enthaltende Kompositpartikel mit 2 bis 20 Gew.-% Siliciumdioxid, 30 bis 85 Gew.-% Kupfer, 5 bis 40 Gew.-% Kupfer-(I)-oxid offenbart. Die Kompositpartikel weisen eine O₂-Absorptionskapazität von maximal 25 mg O₂/g, jeweils bezogen auf die Kompositpartikel auf. Die Kompositpartikel zeigen somit eine O₂-Absorptionskapazität, die ausreichend hoch ist, um als O₂-Absorber eingesetzt zu werden. Dennoch bleibt eine Verbesserung der O₂-Absorptionskapazität eine Herausforderung.

Die Kompositpartikel werden mittels einer Flammenspraypyrolyse mit nachfolgender thermischer Behandlung unter reduzierenden Bedingungen hergestellt. Aufgabe der Erfindung war es auch eine Alternative zu diesem zweistufigen Verfahren bereitzustellen.

Gegenstand der Erfindung ist ein Verfahren zur Herstellung von Kompositpartikeln, die Kupfer und Silicium und optional eine Metallkomponente ausgewählt aus B, Ce, Co, Fe, La, Mn, Ti und/oder Zr enthalten,
wobei der Anteil an Cu 30 bis 95 Gew.-%, Si 5 bis 40 Gew.-%, Metallkomponente 5 bis 50 Gew.-%, jeweils bezogen auf die Summe von Cu, Si, und Metallkomponente ist und und bei den Kompositpartikeln der Quotient aus dem experimentell gefundenen Sauerstoffgehalt zum theoretischen Sauerstoffgehalt <1 ist, und
wobei das Verfahren dadurch gekennzeichnet ist, dass man
a) in einer ersten Zone A eines Durchflussreaktors ein Gemisch zündet und abreagieren lässt, welches
   a₀) gegebenenfalls 0 - 100% der Gesamtmenge einer oder mehrerer Siliciumverbindungen,
   a₁) ein oder mehrere Kupferverbindungen,
   a₂) gegebenenfalls eine oder mehrere Metallverbindungen mit der Metallkomponente B, Ce, Co, Fe, La, Mn, Ti und/oder Zr
   a₃) ein wasserstoffhaltiges Brenngas,
   a₄) ein Sauerstoff enthaltendes Gas
      enthält, und wobei
   a₅) lambda ≤ 1,2 ist,
b) gegebenenfalls in einer Zone B des Durchflussreaktors, die sich zwischen Zone A und C befindet, zu diesem Reaktionsgemisch 0 - 100% der Gesamtmenge einer Siliciumverbindung gibt,
c) in einer der Zone C des Durchflussreaktors das Reaktionsgemisch gegebenenfalls kühlt und nachfolgend den Feststoff(1) von gas- oder dampfförmigen Stoffen abtrennt.

Ein weiterer Gegenstand der Erfindung ist ein Verfahren zur Herstellung Kompositpartikeln, die Kupfer und Silicium und optional eine Metallkomponente ausgewählt aus B, Ce, Co, Fe, La, Mn, Ti und/oder Zr enthalten,
wobei der Anteil an Cu 30 bis 95 Gew.-% , Si 5 bis 40 Gew.-%, an Metallkomponente 5 bis 50 Gew.-%, jeweils bezogen auf die Summe von Cu, Si, und Metallkomponente ist und bei den Kompositpartikeln der Quotient aus dem experimentell gefundenen Sauerstoffgehalt zum theoretischen Sauerstoffgehalt <1 ist, und
die Kompositpartikel eine O₂-Absorptionskapazität, bestimmt nach DIN 6139-1, von wenigstens 40 mg O₂/g Kompositpartikel aufweisen, und
wobei das Verfahren dadurch gekennzeichnet ist, dass man
a) in einer ersten Zone A eines Durchflussreaktors ein Gemisch zündet und abreagieren lässt, welches
   a₀) gegebenenfalls 0 - 100% der Gesamtmenge einer oder mehrerer Siliciumverbindungen,
   a₁) ein oder mehrere Kupferverbindungen,
   a₂) gegebenenfalls eine oder mehrere Metallverbindungen mit der Metallkomponente B, Ce, Co, Fe, La, Mn, Ti und/oder Zr
   a₃) ein wasserstoffhaltiges Brenngas,
   a₄) ein Sauerstoff enthaltendes Gas enthält, und wobei
   a₅) lambda ≤ 1,2 ist,
b) gegebenenfalls in einer Zone B des Durchflussreaktors, die sich zwischen Zone A und C befindet, zu diesem Reaktionsgemisch 0 - 100% der Gesamtmenge einer Siliciumverbindung gibt,
c) in einer der Zone C des Durchflussreaktors das Reaktionsgemisch gegebenenfalls kühlt und nachfolgend den Feststoff(1) von gas- oder dampfförmigen Stoffen abtrennt, und nachfolgend
d) den Feststoff (1) unter reduzierenden Bedingungen thermisch behandelt und in Feststoff (2) überführt.

Die beiden Verfahren haben gemein, dass lambda ≤ 1,2 ist. Bevorzugt gilt, für beide Verfahren, lambda ≤ 1,0. Besonders bevorzugt gilt, für beide Verfahren, 0,5 ≤ lambda ≤ 0,99.

Dabei beschreibt lambda das Verhältnis von eingespeistem Sauerstoff zu stöchiometrisch zur Verbrennung des wasserstoffhaltigen Brenngases benötigten Sauerstoff. Am Beispiel von H₂ als wasserstoffhaltigem Brenngas erfolgt dies gemäß der Reaktionsgleichung 2H₂ + O₂ -> H₂O.

Es ist ein wesentliches Merkmal der beiden erfindungsgemäßen Verfahren, dass bereits während der Partikelgenese im Durchflussreaktor eine wasserstoffreiche Flamme eingesetzt wird.

Dies führt dazu, dass in beiden erfindungsgemäßen Verfahren bei den Kompositpartikeln der Quotient aus dem experimentell gefundenen Sauerstoffgehalt zum theoretischen Sauerstoffgehalt <1, bevorzugt mehr als 0,7 und weniger als 0,95 ist. Die Kompositpartikel direkt aus dem Durchflussreaktor sind bereits als O₂-Absorber einsetzbar.

In der vorliegenden Erfindung wird zur Berechnung von lambda die sogennante Primärluft herangezogen, die mit dem Brenngas die Flamme bildet. Zu einem späteren Zeitpunkt und/oder an einem anderen Ort im Durchflussreaktor kann zusätzliches Sauerstoff enthaltendes Gas, Sekundärluft, hinzugegeben werden. Dies kann vorteilhaft für die Reaktionsführung sein.

Als wasserstoffhaltige Brenngase können bevorzugt Wasserstoff, Methan, Ethan und/oder Propan eingesetzt werden. Besonders bevorzugt ist Wasserstoff. Als Sauerstoff enthaltendes Gas wird hauptsächlich Luft oder mit Sauerstoff angereicherte Luft eingesetzt.

Bei den Kompositpartikeln der vorliegenden Erfindung ist der Quotient aus dem experimentell gefundenen Sauerstoffgehalt zum theoretischen Sauerstoffgehalt <1. Zur Bestimmung dieses Quotienten wird zunächst der Sauerstoffgehalt Oₑₓₚ mittels eines Elementanalysators TCH600, LECO bestimmt. Der theoretische Sauerstoffgehalt errechnet sich aus den mittels ICP-OES bestimmten Anteilen von Cu, Si und gegebenenfalls B, Ce, Co, Fe, La, Mn, Ti und Zr. Dabei werden die Oxide CuO, B₂O₃, CeO₂, Co₂O₃, Fe₂O₃, MnO, La₂O₃, TiO₂ und ZrO₂ zugrunde gelegt. Die Differenz der Anteile der Metalle und der Metalloxide ergibt Oₜₕₑₒᵣ.

Die erfindungsgemäßen Verfahren unterscheiden sich darin, dass die im Durchflussreaktor erhaltenen Kompositpartikel nachträglich noch in einer reduzierenden Atmosphäre thermisch behandelt werden. Durch diese Behandlung kann der Quotient aus dem experimentell gefundenen Sauerstoffgehalt zum theoretischen Sauerstoffgehalt weiter verringert werden. Zusätzlich kann die die O₂-Absorptionskapazität, bestimmt nach DIN nach DIN 6139-1, nochmals deutlich verbessert werden. Es hat sich gezeigt, dass die beiden Parameter nicht voneinander abhängen.

Unter der Gesamtmenge oxidierbarer Siliciumverbindungen ist die Summe an Siliciumverbindungen zu verstehen, die in Zone A und Zone B eingesetzt werden. Die Gesamtmenge an Siliciumverbindungen in Zone A und Zone B kann jeweils zwischen 0 und 100 % liegen. Dies bedeutet, dass die Gesamtmenge beispielsweise in Zone A oder in Zone B zugegeben werden kann, oder dass ein Teil in Zone A ein anderer in Zone B zugegeben werden kann.

Die Temperatur im Durchflussreaktor soll, sofern nur Kupferverbindungen eingesetzt werden, 850 bis 1000°C betragen. Wenn neben der Kupferverbindung noch eine oder mehrere Metallverbindungen eingesetzt werden, hat sich ein Temperaturbereich von 450 bis 600°C als am besten gezeigt.

Die mittlere Verweilzeit im Durchflussreaktor soll, sofern nur Kupferverbindungen eingesetzt werden, weniger als 1 s betragen. Besonders bevorzugt ist ein Bereich von 0,5 bis 0,8 s. Wenn neben der Kupferverbindung noch eine oder mehrere Metallverbindungen eingesetzt werden, soll sich die mittlere Verweilzeit 1 bis 2 s betragen.

Die Kupferverbindung und die Metallverbindung werden bevorzugt als Aerosol eingebracht. In der Regel erfolgt die Aerosolbildung aus einer Lösung unter Verwendung eines Zerstäubungsgases wie beispielsweise Luft oder Stickstoff und einer Zwei- oder Mehrstoffdüse. Der mittlere Tropfendurchmesser ist bevorzugt kleiner 100 µm, besonders bevorzugt kleiner 50 µm. Als Kupferverbindung und Metallverbindungen werden bevorzugt Nitrate, Acetate, Oktoate, Butylate, Ethylate, 2-Ethylhexanoate, Oleate und Naphthenate eingesetzt. Chloride liefern weniger gute Ergebnisse.

Die Siliciumverbindung wird bevorzugt aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂, H₄Si, Si(OC₂H₅)₄ und/oder Si(OCH₃)₄, ausgewählt. Besonders bevorzugt wird SiCl₄ und/oder Si(OC₂H₅)₄ eingesetzt. Falls in Zone A und Zone B Siliciumverbindungen zugegeben werden, so können diese in Zone A und Zone B gleich oder unterschiedlich sein.

Bei der Verwendung kohlenstoffhaltiger Einsatzstoffe könne geringe Mengen an Kohlenstoff im Produkt verbleiben. In der Regel beträgt der Anteil an C, bezogen auf die Kompositpartikel, nicht mehr als 1 Gew.-%, bevorzugt weniger als 0,5 Gew.-%, besonders bevorzugt weniger als 0,1 Gew.-%.

Die thermische Behandlung des Feststoffes (1) erfolgt bevorzugt bei Temperaturen von 200 bis 400°C über einen Zeitraum von 0,5 bis 5 Stunden, besonders bevorzugt 2 bis 4 Stunden. Zur Herstellung der reduzierenden Bedingungen wird bevorzugt Wasserstoff oder ein Wasserstoff enthaltendes Gas eingesetzt. Für die thermische Behandlung hat sich ein Drehrohrofen bewährt.

Ein weiterer Gegenstand der Erfindung sind Kompositpartikel, die Kupfer und Silicium enthalten und optional B, Ce, Co, Fe, La, Mn, Ti und/oder Zr enthalten, wobei der Anteil an Cu 30 bis 95 Gew.-%, Si 5 bis 40 Gew.-%, Ce, Fe, Mn oder Ti 5 bis 50 Gew.-%, jeweils bezogen auf die Summe von Cu, Si, B, Ce, Co, Fe, La, Mn, Ti und Zr ist und
bei denen der Quotient aus dem experimentell gefundenen Sauerstoffgehalt zum theoretischen Sauerstoffgehalt < 1, bevorzugt < 0,8, besonders bevorzugt 0,3 bis 0,7 ist und
die eine O₂-Absorptionskapazität, bestimmt nach DIN 6139-1, von wenigstens 40 mg O₂/g Kompositpartikel, bevorzugt wenigstens 70 mg O₂/g, ganz besonders bevorzugt 80 bis 200 mg O₂/g aufweisen.

Die Metallkomponenten können aus der Gruppe bestehend aus B, Ce, Co, Fe, La, Mn, Ti und/oder Zr ausgewählt werden. Bevorzugt sind Ce, Fe, Mn und/oder Ti. Die besten Ergebnisse werden erhalten, wenn die Kompositpartikel nur die Bestandteile Cu, Si und O enthalten.

Die erfindungsgemäßen Kompositpartikel weisen eine normierte

Reaktionsgeschwindigkeitskonstante k, bezogen auf das erste Messintervall, bestimmt nach DIN 6139-1, von bevorzugt k ≥ 1 cm³/g*Tag, besonders bevorzugt 2 ≤ k ≤ 10 cm³/g*Tag auf.

Das in den erfindungsgemäßen Kompositpartikeln vorliegende Silicium liegt im wesentlichen oder vollständig als amorphes Siliciumdioxid vor.

Die erfindungsgemäßen Kompositpartikel umfassen a) Kern-Hülle Partikel, wobei die Hülle im wesentlichen aus amorphem Siliciumdioxid besteht und b) Kompositpartikel mit einer Matrix-Domänen-Struktur, wobei die Metalle B, Ce, Co, Fe, La, Mn, Ti und/oder Zr in Form ihrer Oxide und Kupfer in Form von Cu(0), Cu₂O und CuO die Domänen bilden und die Matrix im wesentlichen aus amorphem Siliciumdioxid besteht. Die Kompositpartikel gemäß a) und b) können als isolierte Einzelpartikel und/oder in Form aggregierter Einzelpartikel vorliegen. Die Einzelpartikel weisen eine sphärische und/oder sphäroide Gestalt auf. Ihr mittlerer Partikeldurchmesser beträgt bevorzugt 10 bis 500 nm, besonders bevorzugt 20 bis 200 nm.

Die Hülle der Kern-Hülle-Partikel gemäß a) besteht im wesentlichen aus amorphem Siliciumdioxid. Im wesentlichen soll bedeuten, dass die Hülle geringe Anteile anderer Verbindungen bedingt durch Verunreinigungen der Einsatzstoffe aufweisen kann. Generell gilt, dass der Anteil an Siliciumdioxid in der Hülle wenigstens 99 Gew.-%, bevorzugt wenigstens 99,5 Gew.-% beträgt. Unter amorph wird ein Material verstanden, bei dem mit den üblichen Methoden der Röntgendiffraktometrie keine Beugungssignale erfasst werden können.

Bei der Hülle handelt es sich um eine, die den Kern vollständig umgibt, jedoch durchlässig für Sauerstoff ist. Bevorzugt zeichnet sich die Hülle dadurch aus, dass bei Lagerung von 0,33 g der Kern-Hülle-Partikel in 20ml HCl (1 mol/l) in H₂O₂ (0,5 mol/l) oder einer Lösung von 8 Gew.-% NaCl und 2 Gew.-% CaCl₂ in Wasser über einen Zeitraum von 12 Stunden bei 60°C weniger als 1000 ppm Kupfer, bevorzugt weniger als 100 ppm in der überstehenden Lösung gefunden werden. Eine geeignete Analysetechnik hierfür stellt beispielsweise ICP-OES dar.

Die erfindungsgemäßen Kompositpartikel können Cu(0), Cu₂O, CuO sowie die Metalloxide von B, Ce, Co, Fe, La, Mn, Ti und/oder Zr, sowie Mischphasen, wie Titanate oder Manganate enthalten. Titandioxid kann in Form von Anatas und/oder Rutil vorliegen. Die Zusammensetzung dieser Bestandteile kann mittels Röntgendiffraktometrie erfolgen.

Eine besondere Ausführungsform sieht vor, dass die Kompositpartikel sie eine BET-Oberfläche von 25 bis 60 m²/g, besonders bevorzugt 40 bis 55 m²/g und eine Siliciumdioxidhülle aufweisen und Cu(O), Cu₂O und/oder CuO enthalten, wobei der Anteil an Cu(0), bezogen auf die Summe von Cu(O), Cu₂O und/oder CuO, wenigstens 50 Gew.-% ist.

Ein weiterer Gegenstand der Erfindung ist die Verwendung der nach den erfindungsgemäßen Verfahren hergestellten Kompositpartikel oder der erfindungsgemäßen Kompositpartikel zur Entfernung von Sauerstoff aus Verpackungen.

### Beispiele

### Analytik

Die O₂-Absorptionskapazität und die normierte Reaktionsgeschwindigkeitskonstante k bezogen auf das erste Messintervall der Feststoffe (2), werden nach DIN 6139-1 bestimmt.

Bestimmung von Cu, Fe, Ti, Mn und Ce: Das Material wurde bei 850°C bis zur Massekonstanz geglüht. Die Elementgehalte nach Perchlorsäure/Flusssäure- bzw. Schwefelsäure/Flusssäure-Abdampf und anschließendem Lösen in Mineralsäure mittels ICP-OES (Optische Emissionsspektrometrie mit induktiv gekoppeltem Plasma) bestimmt.

Bestimmung von Si: Eine Probe wurde nach alkalischem Schmelzaufschluss und anschließendem Lösen in Mineralsäuren mittels ICP-OES bestimmt. Vermessen wurden die Proben mit dem ICPOES Optima, PerkinElmer.

Die Ergebnisunsicherheit beträgt für die Metalle mit Ausnahme von Si 0,5 bis 2% relativ und für Si 2 bis 5% relativ.

Bestimmung von O: Der Sauerstoffgehalt wird mittels des Elementanalysators TCH600, LECO, bestimmt. Die Ergebnisunsicherheit beträgt 0,8 bis 1,0 %.

Die BET-Oberfläche wurde bestimmt nach DIN 66131.

Die Bestimmung der Anteile von Cu(0), Cu₂O und CuO erfolgt durch Röntgendiffraktometrie. Die Auswertung erfolgt mit der Rietveld-Methode, wobei der Fehler bei ca. 10 % relativ liegt.

### Einsatzstoffe

Kupferlösung: Kupfernaphthenat in Testbenzin; Cu-Gehalt von 8 Gew.-%. Eisenlösung: Eisenoktoat in Testbenzin mit max. 1 % Aromatengehalt; Fe-Gehalt 8 Gew.-%. Manganlösung: Mangannitrat in Methanol; Mn-Gehalt 8 Gew.-%. Ti(OC₂H₅)₄, Si(OC₂H₅)₄.

### Beispiel 1:

Zone A: Ein Aerosol, welches durch Verdüsen von 1600 g/h der Kupferlösung und 4 Nm³/h Stickstoff als Verdüsungsgas bei Raumtemperatur (23°C) mittels einer Zweistoffdüse erhalten wird, wird mit 2 Nm³/h (0,089 kmol/h) Wasserstoff und 20 Nm³/h Luft (0,187 kmol O₂/h) wird zur Reaktion gebracht. Zusätzlich werden 20 Nm³/h Sekundärluft in den Durchflussreaktor eingebracht. Die Temperatur 50 cm unterhalb des Brennermundes beträgt 922°C.

Zone B: In den Strom des heißen Reaktionsgemisches aus Zone A wird 100 g/h dampfförmiges Si(OC₂H₅)₄ gegeben.

Zone C: Nachfolgend wird das Reaktionsgemisch abgekühlt und der erhaltene Feststoff(1) auf einem Filter von den gasförmigen Stoffen abgeschieden.

Die mittlere Verweilzeit im Durchflussreaktor beträgt 0,67 s.

Der Feststoff (1) weist 73,3 Gew.-% Cu und 8 Gew.-% Si auf. Seine BET-Oberfläche beträgt 16 m2/g. Der Experimentell bestimmte Sauerstoffgehalt beträgt 22,5 Gew.-%. Der theoretische Sauerstoffgehalt beträgt 27,6 Gew.-%. Damit ergibt sich Oₑₓₚ/Oₜₕₑₒᵣ zu 0,82.

Der Feststoff (1) wird mit einer Aufheizgeschwindigkeit von 6,3°C/min auf eine Endtemperatur von 400°C erhitzt und dort über einen Zeitraum von 3 Stunden bei einer Temperatur von 300°C in einer Formiergasatmosphäre (80/20 Vol.-% N₂/H₂, Volumenstrom 150 Nl/h) behandelt.

Der erhaltene Feststoff (2) weist einen Anteil von Cu(0) von 95 Gew.-% auf, bezogen auf die Kompositpartikel. Der Anteil an Cu₂O beträgt 5 Gew.-%. Seine BET-Oberfläche beträgt 54 m²/g.Der experimentell bestimmte Sauerstoffgehalt beträgt 11 Gew.-%. Damit ergibt sich Oₑₓₚ/Oₜₕₑₒᵣ zu 0,40. Die normierte Reaktionsgeschwindigkeitskonstante k beträgt 6,8 cm³/g*Tag, die O₂-Absorptionskapazität 131,6 mg/g.

Die Beispiele 2 bis 10 werden analog durchgeführt.

Tabelle 1 zeigt die Einsatzstoffe und die Reaktionsbedingungen der Beispiele 1 bis 10.

Tabelle 2 gibt die physikalisch-chemischen Eigenschaften der aus den Beispiele 1 bis 10 erhaltenen Feststoffe (1) wieder.

Tabelle 3 zeigt die Reaktionsbedingungen bei der thermischen Behandlung der Feststoffe (1). Tabelle 4 gibt die physikalisch-chemischen Eigenschaften der aus den Beispiele 1 bis 10 erhaltenen Feststoffe (2) wieder.

**Tabelle 1: Einsatzstoffe und Reaktionsbedingungen zur Herstellung von Kompositpartikeln im Durchflussreaktor**

| **Beispiel** | | **1** | **2** | **3** | **4** | **5** | **6** | **7** | **9** | **10** |
|---|---|---|---|---|---|---|---|---|---|---|
| Kupferlösung | g/h | 1600 | 2000 | 2000 | 1725 | 1000 | 1500 | 2000 | 1000 | 1200 |
| Eisenlösung | g/h | - | - | - | - | 1000 | 500 | - | 700 | - |
| Manganlösung | g/h | - | - | - | - | - | - | - | 300 | - |
| Ti(OC₂H₅)₄ | g/h | - | - | - | - | - | - | 800 | - | - |
| Cerlösung | g/h | - | - | - | - | - | - | - | - | 800 |
| Stickstoff | Nm³/h | 4 | 5 | 5 | 5 | 4 | 4 | 4 | 4 | 4 |
| Si(OC₂H₅)₄^{*} | g/h | 100 | 200 | 100 | 575 | 120 | 120 | 180 | 140 | 120 |
| Wasserstoff | Nm³/h | 2 | 2 | 2,5 | 2 | 3 | 3 | 3 | 3 | 3 |
| | kmol/h | 0,089 | 0,089 | 0,112 | 0,089 | 0,134 | 0,134 | 0,134 | 0,134 | 0,134 |
| Primärluft | Nm³/h | 20 | 18 | 18 | 18 | 20 | 20 | 20 | 20 | 20 |
| Sauerstoff | kmol/h | 0,187 | 0,169 | 0,169 | 0,169 | 0,187 | 0,187 | 0,187 | 0,187 | 0,187 |
| Lambda | | 1,05 | 0,945 | 0,756 | 0,945 | 0,7 | 0,7 | 0,7 | 0,7 | 0,7 |
| Sekundärluft | Nm³/h | 20 | 22 | 22 | 20 | 5 | 5 | 5 | 5 | 5 |
| Temperatur | °C | 922 | 962 | 966 | 941 | 454 | 501 | 523 | 515 | 514 |
| Mittlere Verweilzeit | s | 0,67 | 0,63 | 0,62 | 0,67 | 1,78 | 1,67 | 1,57 | 1,63 | 1,63 |

| | | | | | | | | | | |
|---|---|---|---|---|---|---|---|---|---|---|
| * Treibstickstoff 1 Nm³/h | | | | | | | | | | |

**Tabelle 2: Physikalisch-chemische Eigenschaften des Feststoffes (1)**

| **Beispiel** | | **1** | **2** | **3** | **4** | **5** | **6** | **7** | **9** | **10** |
|---|---|---|---|---|---|---|---|---|---|---|
| BET-Oberfläche | | 16 | 12 | 17 | 13 | 15 | 24 | 19 | 10 | - |
| gefunden | | | | | | | | | | |
| Cu | Gew.-% | 73,3 | 66,5 | 75,9 | 41,9 | 31,8 | 50,0 | 30,2 | 33,9 | 37,9 |
| Fe | Gew.-% | - | - | - | - | 33,2 | 20,2 | - | 22,0 | - |
| Mn | Gew.-% | - | - | - | - | - | - | - | 9,7 | - |
| Ti | Gew.-% | - | - | - | - | - | - | 29,5 | - | - |
| Ce | Gew.-% | - | - | - | - | - | - | - | - | 33,5 |
| Si | Gew.-% | 8 | 11,6 | 6,6 | 24,6 | 6,9 | 8 | 4,4 | 7,2 | 6,3 |
| Summe | | 81,3 | 78,1 | 82,5 | 66,5 | 71,9 | 78,2 | 64,1 | 72,8 | 77,7 |
| Oₑₓₚ | Gew.-% | 22,5 | 22 | 25,5 | 31,00 | 22 | 29,7 | 25,5 | 23,5 | 21,3 |
| berechnet | | | | | | | | | | |
| CuO | Gew.-% | 91,8 | 83,2 | 95,0 | 52,5 | 39,8 | 62,6 | 37,8 | 42,4 | 47,4 |
| Fe₂O₃ | Gew.-% | - | - | - | - | 47,5 | 28,9 | - | 31,5 | - |
| MnO | Gew.-% | - | - | - | - | - | - | - | 12,5 | - |
| TiO₂ | Gew.-% | - | - | - | - | - | - | 49,2 | - | - |
| CeO₂ | Gew.-% | - | - | - | - | - | - | - | - 41,2 | 41,2 |
| SiO₂ | Gew.-% | 17,1 | 24,8 | 14,1 | 52,6 | 14,8 | 17,1 | 9,4 | 15,4 | 13,5 |
| Summe | | 108,9 | 108,1 | 109,1 | 105,1 | 102,0 | 108,6 | 96,4 | 101,8 | 102,1 |
| Otheor | Gew.-% | 27,6 | 30,0 | 26,6 | 38,6 | 30,1 | 30,4 | 32,3 | 29,0 | 24,4 |
| Oₑₓₚ/Oₜₕₑₒᵣ | | 0,82 | 0,73 | 0,96 | 0,80 | 0,73 | 0,98 | 0,79 | 0,81 | 0,87 |

**Tabelle 3: Thermische Behandlung Feststoff (1)**

| **Beispiel** | | **1** | **2** | **3** | **4** | **5** | **6** | **7** | **9** | **10** |
|---|---|---|---|---|---|---|---|---|---|---|
| Aufheizgeschw. | °C/min | 6,3 | 4,7 | 4,7 | 4,7 | 4,5 | 4,5 | 6,3 | 4,5 | 6,3 |
| Endtemperatur | °C | 400 | 300 | 300 | 300 | 290 | 290 | 400 | 290 | 400 |
| Haltezeit | h | 3 | 3 | 3 | 3 | 3 | 3 | 3 | 3 | 3 |
| Formiergas* | l/h | 150 | 150 | 150 | 150 | 180 | 180 | 180 | 180 | 180 |

| | | | | | | | | | | |
|---|---|---|---|---|---|---|---|---|---|---|
| *Formiergas (H2:N2) = 20:80 Vol.-Verhältnis | | | | | | | | | | |

**Tabelle 4: Physikalisch-chemische Eigenschaften des Feststoffes (2)**

| **Beispiel** | | **1** | **2** | **3** | **4** | **5** | **6** | **7** | **9** | **10** |
|---|---|---|---|---|---|---|---|---|---|---|
| BET-Oberfläche | m²/g | 54 | 51 | 42 | 30 | 14 | 16 | 25 | 15 | 15 |
| Cu(0)* | % | 95 | 79 | 84 | 76 | 28 | 72 | 22 | 49 | 35 |
| CuO* | % | - | - | - | - | 12 | - | 12 | - | 3 |
| Cu₂O* | % | 5 | 21 | 16 | 24 | 8 | - | - | - | 9 |
| Oₑₓₚ | Gew.-% | 11,0 | 14,6 | 11,0 | 27,0 | 23,8 | 16,9 | 26,3 | 23,4 | 17,7 |
| Oₑₓₚ/Oₜₕₑₒᵣ | % | 0,40 | 0,49 | 0,41 | 0,70 | 0,79 | 0,56 | 0,81 | 0,81 | 0,73 |
| k** | cm³/g*Tag | 6,8 | 2,2 | 5,7 | 1,5 | 3,3 | 5,7 | 6,5 | 1,6 | 1,9 |
| O₂-Absorptions-kapazität | mg/g | 131,6 | 80,4 | 135,9 | 41,4 | 89,7 | 123,1 | 156,4 | 88,5 | 48,7 |

| | | | | | | | | | | |
|---|---|---|---|---|---|---|---|---|---|---|
| * aus Röntgendiffraktometrie; **normierte Reaktionsgeschwindigkeitskonstanten bezogen auf das erste Messintervall; | | | | | | | | | | |

## Patentansprüche

1. Verfahren zur Herstellung von Kompositpartikeln, die Kupfer und Silicium und optional eine Metallkomponente ausgewählt aus B, Ce, Co, Fe, La, Mn, Ti und/oder Zr enthalten, wobei der Anteil an Cu 30 bis 95 Gew.-%, Si 5 bis 40 Gew.-%, Metallkomponente 5 bis 50 Gew.-%, jeweils bezogen auf die Summe von Cu, Si, und Metallkomponente ist und
und bei den Kompositpartikeln der Quotient aus dem experimentell gefundenen Sauerstoffgehalt zum theoretischen Sauerstoffgehalt <1 ist,
**dadurch gekennzeichnet, dass** man
a) in einer ersten Zone A eines Durchflussreaktors ein Gemisch zündet und abreagieren lässt, welches
a₀) gegebenenfalls 0 - 100% der Gesamtmenge einer oder mehrerer Siliciumverbindungen,
a₁) ein oder mehrere Kupferverbindungen,
a₂) gegebenenfalls eine oder mehrere Metallverbindungen mit der Metallkomponente B, Ce, Co, Fe, La, Mn, Ti und/oder Zr
a₃) ein wasserstoffhaltiges Brenngas,
a₄) ein Sauerstoff enthaltendes Gas
enthält, und wobei
a₅) lambda ≤ 1,2 ist,
b) gegebenenfalls in einer Zone B des Durchflussreaktors, die sich zwischen Zone A und C befindet, zu diesem Reaktionsgemisch 0 - 100% der Gesamtmenge einer Siliciumverbindung gibt,
c) in einer der Zone C des Durchflussreaktors das Reaktionsgemisch gegebenenfalls kühlt und nachfolgend den Feststoff(1) von gas- oder dampfförmigen Stoffen abtrennt.

2. Verfahren zur Herstellung von Kompositpartikeln, die Kupfer und Silicium und optional eine Metallkomponente ausgewählt aus B, Ce, Co, Fe, La, Mn, Ti und/oder Zr enthalten, wobei der Anteil an Cu 30 bis 95 Gew.-% , Si 5 bis 40 Gew.-%, an Metallkomponente 5 bis 50 Gew.-%, jeweils bezogen auf die Summe von Cu, Si, und Metallkomponente ist und
bei den Kompositpartikeln der Quotient aus dem experimentell gefundenen Sauerstoffgehalt zum theoretischen Sauerstoffgehalt <1 ist, und
die Kompositpartikel eine O₂-Absorptionskapazität, bestimmt nach DIN 6139-1, von wenigstens 40 mg O₂/g Kompositpartikel aufweisen,
**dadurch gekennzeichnet, dass** man
a) in einer ersten Zone A eines Durchflussreaktors ein Gemisch zündet und abreagieren lässt, welches
a₀) gegebenenfalls 0 - 100% der Gesamtmenge einer oder mehrerer Siliciumverbindungen,
a₁) ein oder mehrere Kupferverbindungen,
a₂) gegebenenfalls eine oder mehrere Metallverbindungen mit der Metallkomponente B, Ce, Co, Fe, La, Mn, Ti und/oder Zr
a₃) ein wasserstoffhaltiges Brenngas,
a₄) ein Sauerstoff enthaltendes Gas enthält, und wobei
a₅) lambda ≤ 1,2 ist,
b) gegebenenfalls in einer Zone B des Durchflussreaktors, die sich zwischen Zone A und C befindet, zu diesem Reaktionsgemisch 0 - 100% der Gesamtmenge einer Siliciumverbindung gibt,
c) in einer der Zone C des Durchflussreaktors das Reaktionsgemisch gegebenenfalls kühlt und nachfolgend den Feststoff(1) von gas- oder dampfförmigen Stoffen abtrennt, und nachfolgend
d) den Feststoff (1) unter reduzierenden Bedingungen thermisch behandelt und in Feststoff (2) überführt.

3. Verfahren nach den Ansprüchen 1 oder 2, **dadurch gekennzeichnet, dass** die Kupferverbindung und die Metallverbindung als Aerosol eingebracht werden, wobei die Aerosolbildung aus einer Lösung unter Verwendung eines Zerstäubungsgases erfolgt.

4. Verfahren nach den Ansprüchen 1 bis 3, **dadurch gekennzeichnet, dass** die Kupferverbindung und die Metallverbindung jeweils ein Nitrat, Acetat, Oktoat, Butylat, Ethylat, 2-Ethylhexanoat, Oleat und/oder Naphthenat ist.

5. Verfahren nach den Ansprüchen 1 bis 4, **dadurch gekennzeichnet, dass** die Siliciumverbindung aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂, H₄Si, Si(OC₂H₅)₄ und/oder Si(OCH₃)₄ ausgewählt ist.

6. Verfahren nach den Ansprüchen 2 bis 5, **dadurch gekennzeichnet, dass** die thermische Behandlung des Feststoffes (1) bei Temperaturen von 200 - 400°C über einen Zeitraum von 0,5 - 5 Stunden erfolgt.

7. Verfahren nach den Ansprüchen 2 bis 6, **dadurch gekennzeichnet, dass** zur Herstellung der reduzierenden Bedingungen Wasserstoff oder ein Wasserstoff enthaltendes Gas eingesetzt wird.

8. Kompositpartikel, die Kupfer und Silicium enthalten und optional B, Ce, Co, Fe, La, Mn, Ti und/oder Zr, wobei der Anteil an Cu 30 bis 95 Gew.-%, Si 5 bis 40 Gew.-%, B, Ce, Co, Fe, La, Mn, Ti und/oder Zr 5 bis 50 Gew.-%, jeweils bezogen auf die Summe von Cu, Si, B, Ce, Co, Fe, La, Mn, Ti und Zr ist und bei denen der Quotient aus dem experimentell gefundenen Sauerstoffgehalt zum theoretischen Sauerstoffgehalt <1 ist und die eine O₂-Absorptionskapazität, bestimmt nach DIN 6139-1, von wenigstens 40 mg O₂/g Kompositpartikel aufweisen.

9. Kompositpartikel nach Anspruch 8, **dadurch gekennzeichnet, dass** der Quotient aus dem experimentell gefundenen Sauerstoffgehalt zum theoretischen Sauerstoffgehalt 0,3 bis 0,7 ist.

10. Kompositpartikel nach den Ansprüchen 8 oder 9, **dadurch gekennzeichnet, dass** sie eine O₂-Absorptionskapazität, bestimmt nach DIN 6139-1, von wenigstens 70 mg O₂/g Kompositpartikel aufweisen.

11. Kompositpartikel nach den Ansprüchen 8 bis 10, **dadurch gekennzeichnet, dass** sie eine normierte Reaktionsgeschwindigkeitskonstante k, bezogen auf das erste Messintervall, bestimmt nach DIN 6139-1, von k ≥ 1 cm³/g*Tag aufweisen.

12. Kompositpartikel nach den Ansprüchen 8 bis 11, **dadurch gekennzeichnet, dass** das Siliciumdioxid eine Hülle bildet.

13. Kompositpartikel nach den Ansprüchen 8 bis 12, **dadurch gekennzeichnet ,dass** sie eine BET-Oberfläche von 25 bis 60 m2/g und
eine Siliciumdioxidhülle aufweisen und
Cu(O), Cu₂O und/oder CuO enthalten und
der Anteil an Cu(0) bezogen auf die Summe von Cu(0), Cu₂O und/oder CuO, wenigstens 50 Gew.-% ist.

14. Verwendung der nach dem Verfahren gemäß der Ansprüche 1 oder 2 hergestellten Kompositpartikel oder der Kompositpartikel gemäß der Ansprüche 8 bis 15 zur Entfernung von Sauerstoff aus Verpackungen.
